# EUROPÄISCHE PATENTSCHRIFT

(11) **EP 1 637 775 B1**
(45) Veröffentlichungstag und Bekanntmachung des Hinweises auf die Patenterteilung: **28.05.2008**
(21) Anmeldenummer: 05019643.5
(22) Anmeldetag: 09.09.2005
(51) Int. Cl.: F16H 25/24

(54) **Linearantrieb mit einer Notverstellmöglichkeit**
Linear actuator with manual actuation for emergency
Actionneur linéaire avec commande manuelle en cas d'urgence

(30) Priorität: 20.09.2004 CH 15432004
(43) Veröffentlichungstag der Anmeldung: 22.03.2006
(73) Patentinhaber: AB SKF, 415 50 Göteborg (SE)
(72) Erfinder: Jaecklin, Victor, Dr., 5400 Baden (CH); Soltermann, Marcel, Cedarburg WI 53012 (US)
(74) Vertreter: Klein, Friedrich Jürgen

(56) Entgegenhaltungen:
- EP-A- 0 685 662
- EP-A- 1 186 800
- EP-A- 1 457 710
- US-A- 5 329 657

## Beschreibung

Die Erfindung betrifft einen Linearantrieb mit einer antriebsseitig von einem Motor rotativ antreibbaren Spindel, deren Rotationsbewegung in Richtung zur Abtriebsseite des Linearantriebs hin in eine zumindest im wesentlichen translatorische Bewegung eines mit der Spindel wirkverbundenen Getriebegliedes transformierbar ist, der Linearantrieb ferner eine drehfeste Verbindung zwischen dem Getriebeglied und einem Verbindungsteil aufweist, wobei mit dem Verbindungsteil der Linearantrieb an einer Abtriebsseite an einer zu verstellenden Last anschliessbar ist, die drehfeste Verbindung mittels einer (Not- oder Schnell-)Verstelleinrichtung lösbar ist, um eine motorunabhängige Verstellbewegung des Linearantriebs zuzulassen. Im Zusammenhang mit der Erfindung wird angenommen, dass in Kraftflussrichtung die Abtriebsseite von der Antriebsseite des Linearantriebs durch die Verstelleinrichtung (gedanklich) voneinander getrennt werden.

Bei derartigen Linearantrieben wird eine rotative Antriebsbewegung eines Motors in eine lineare Nutzbewegung umgewandelt, wie dies beispielsweise bei Antrieben für Betten, Patientenbetten sowie bei weiteren medizinaltechnischen Einrichtungen oder Industrie-Anwendungen oftmals vorgesehen ist. In den meisten Fällen weist die Spindel derartiger Linearantriebe ein Aussengewinde auf, in dem eine Mutter relativ zur Spindel dreh- und hierdurch auch längsverschiebbar angeordnet ist. Die translatorische Relativbewegung der Mutter gegenüber der Spindel wird dann auf ein mit der Mutter wirkverbundenes Schubrohr übertragen. Am Schubrohr oder mit dem Schubrohr verbunden weisen derartige Linearantriebe einen Verbindungsteil, wie beispielsweise einen Gabelkopf auf, an dem eine zu bewegende Last befestigt werden kann. Die Längsbewegung des Schubrohrs wird zur Bewegung der Last genutzt.

Insbesondere bei Anwendungen im Medizinalbereich soll oftmals eine motorunabhängige Verstellung des Linearantriebs möglich sein. Eine solche Verstellung wird unter anderem dann von Bedeutung, wenn entweder antriebsseitig ein Defekt auftritt, beispielsweise der Motor ausfällt, oder aber eine kontrollierte und antriebsunabhängige Verstellung erforderlich ist. Eine solche Möglichkeit der Benutzung des Linearantriebs kann auch sinnvoll sein, um eine kontrollierte Verstellung des Linearantriebs mit einer Verstellgeschwindigkeit zu ermöglichen, die die mit dem Motor erzielbare Verstellgeschwindigkeit des Schubrohrs übersteigt. So kann die Verstelleinrichtung auch als sogenannte Notabsenkung benutzt werden, mit der beispielsweise in einem Notfall ein Kopfteil eines Bettes kontrolliert und schnell genug in eine horizontale Lage überführt werden kann. Da der Linearantrieb bei derartigen Verstellungen in der Regel mit der Last belastet ist und oftmals nicht selbsthemmende Gewinde bei der Spindel zum Einsatz kommen, kann eine Bremse erforderlich sein, wie dies in der gattungsgemäßen Schweizer Patentanmeldung CH 0423/03 gezeigt ist. Auch eine Schnellverstellung, bei der beispielsweise ein Patient möglichst schnell in eine Endlage eines Bettes oder Operationstisches - und damit auch in eine Endlage des Antriebs - überführt werden soll, kann ein Anwendungsfall für eine motorunabhängige Verstellmöglichkeit sein. Diese Verstellmöglichkeit, die auch für die vorliegende Erfindung von Bedeutung ist, wird üblicherweise als Schnellverstellung bezeichnet.

Um eine Not- oder auch eine Schnellverstellung zu ermöglichen, sind im Zusammenhang mit den eingangs genannten Linearantrieben bereits sogenannte Schlingenfedern (auch als Umschlingungsfedern bezeichnet) verwendet worden. Hierzu wird üblicherweise eine Schlingenfeder in einer hülsenförmigen Bremsbüchse angeordnet, wobei die Schlingenfeder beidseits zapfenförmige Enden aufweist, die etwa radial nach innen zeigen. Diese Enden dienen dazu in Anlage gegen antriebs- oder abtriebsseitige Mitnehmer zu gelangen, wodurch der Radius der Schlingenfeder entweder leicht vergrössert oder geweitet wird. Hierdurch wiederum gelangt eine Aussenfläche der Windungen der Schlingenfeder entweder gegen eine Innenfläche der Bremsbüchse oder wird von letzterer abgehoben. Je nachdem, ob zwischen der Schlingenfeder und der Bremsbüchse Kontakt vorhanden ist oder nicht, wird ein Bremsmoment erzeugt oder ein solches verhindert.

Zur Not- bzw. Schnellverstellung ist es üblicherweise vorgesehen, den Kontakt zwischen der Schlingenfeder und der Bremsbüchse zumindest weitestgehend zu lösen. Bei den bekannten Lösungen ist allerdings nachteilig, dass es bei derartigen Not- bzw. Schnellverstellungen auch zu Fehlbedienungen oder sogar zu Sicherheitsproblemen kommen kann. Bei einer solchen Fehlbedienung kann beispielsweise durch Betätigung der Verstelleinrichtung ein mit der Gewindemutter drehfest verbundenes Schubrohr des Linearantriebs fast vollständig aus dem Mantelrohr herausbewegt werden. Es ist zwar in der Regel vorgesehen, dass in diesem Fall das Schubrohr einen Endschalter betätigt, der den Linearantrieb aus Sicherheitsgründen vollständig abschaltet. Trotzdem ist es dann üblicherweise erforderlich den Linearantrieb durch einen Techniker wieder in Betriebsbereitschaft versetzen zu lassen, was eine Betriebsausfallzeit des Linearantriebs bedeutet und Kosten verursacht.

Der Erfindung liegt deshalb die Aufgabe zugrunde einen Linearantrieb der eingangs genannten Art zu schaffen, bei dem die Möglichkeiten solcher Fehlmanipulationen zumindest weitestgehend ausgeschlossen sind, obwohl Mittel für eine Not- und/oder Schnellverstellung vorhanden sind.

Diese Aufgabe wird bei einem Linearantrieb der eingangs genannten Art erfindungsgemäß dadurch gelöst, dass die drehfeste Verbindung mittels einem Verstellelement der Verstelleinrichtung nur für Bewegungen mit stets nur einer einzigen vorbestimmten relativen Drehrichtung zwischen der Spindel und dem Getriebeglied lösbar ist.

Die Erfindung basiert auf dem Gedanken konstruktive Massnahmen vorzusehen, mit der eine Beschränkung einer Freigabemöglichkeit zur Ausführung von Bewegungen bei einer Betätigung der (Not-) Verstelleinrichtung erreicht wird. Vorzugsweise können diese Massnahmen in der Verstellvorrichtung selbst vorgesehen sein. Hierzu kann beispielsweise durch eine Beschränkung der Betätigungsmöglichkeiten die Verstelleinrichtung entweder nur in eine Richtung betätigt werden, oder bei einer Betätigung in beispielsweise zwei Richtungen, nur eine Betätigungsrichtung auch zu einer Entkoppelung der Abtriebsseite mit dem Antrieb bzw. Motor führen. In diesem Fall ist das im Normalbetrieb translatorisch bewegbare Getriebeglied, wie beispielsweise eine Gewindemutter bzw. ein Schubrohr, für eine Drehbewegung freigegeben. Es kann dann bevorzugt sein, dass bei einer Betätigung des Verstellelements in eine Nicht-Freigabe-Betätigungsrichtung eine drehfeste Verbindung zwischen dem antriebsseitigen translatorisch bewegbaren Getriebeglied und dem Verbindungsteil erzeugt, bzw. falls bereits vorhanden, diese Verbindung beibehalten wird.

In einer konstruktiv besonders günstigen Lösung kann eine an sich bekannte Schlingenfeder, die auch als Schrauben- oder Bremsfeder bezeichnet wird, vorgesehen sein. Im Zusammenhang mit der Erfindung bietet sich ein solches Maschinenelement in besonderem Masse an, da es ohnehin in derartigen Linearantrieben, insbesondere in Verbindung mit Notverstelleinrichtungen für Linearantrieben, bereits häufig verwendet wird. Obwohl derartige Maschinenelemente im Zusammenhang mit gattungsgemässen Linearantrieben hinlänglich bekannt sind, ist die erfindungsgemässe Funktion bisher nicht verwirklicht worden. Die bevorzugte Ausführungsform eines Linearantriebs mit einer Schraubenfeder ermöglicht bestehende Konstruktionen mit besonders geringem Aufwand mit der erfindungsgemässen Funktion zu erweitern.

Eine bevorzugte erfindungsgemässe Weiterbildung kann vorsehen, dass mittels einer Betätigung des Verstellelements in eine bestimmte Betätigungsrichtung stets nur auf eines der beiden Enden der Schraubenfeder eingewirkt wird, wobei diese Einwirkung zu einer zumindest lokalen Verkleinerung eines Durchmessers der Schraubenfeder führt. Die Verkleinerung des Durchmessers kann zu einem Lösen einer im Normalbetrieb des Linearantriebs bestehenden, beispielsweise reibschlüssigen, Verbindung der Schraubenfeder mit einer dazugehörenden Bremsbüchse führen.

Bei einer Betätigung des Verstellelements in eine andere Betätigungsrichtung sollte hingegen der Durchmesser der Schraubenfeder geweitet werden, wodurch eine drehfeste Verbindung zwischen der Schraubenfeder und der Bremsbüchse erzeugt bzw. beibehalten wird. Die Notverstellung wird hierdurch nicht freigegeben.

Mit dem Verstellelement lässt sich als Verstellbewegung vorzugsweise eine rotative Verstellbewegung ausführen. Diese kann in zweckmässiger Weise unmittelbar als Betätigungsbewegung der Schraubenfeder genutzt werden.

In konstruktiv günstigen erfindungsgemässen Ausgestaltungen kann ein erster Betätigungskörper und vorzugsweise auch ein zweiter Betätigungskörper vorhanden sein. Beide Betätigungskörper können Betätigungselemente aufweisen, von denen zumindest einige in eine rotative Wirkverbindung mit zumindest einem der Enden der Schraubenfeder bringbar sind. Einer der beiden Betätigungskörper kann hierbei mit dem Verstellelement, der andere Betätigungskörper drehfest mit dem abtriebsseitigen Verbindungsteil wirkverbunden sein. Eine günstige Ausführungsform kann hierbei vorsehen, dass an einem Umfang von jedem Betätigungskörper jeweils mit Abstand zueinander Betätigungselemente angeordnet sind.

In bevorzugten Ausführungsformen kann ein Betätigungskörper zumindest ein Betätigungselement, beispielsweise eine Klaue, weniger aufweisen als der andere Betätigungskörper. Zur Erzielung der erfindungsgemässen Funktion kann es dann vorteilhaft sein, wenn ein Ende der Schraubenfeder in einen Bereich zwischen zwei Betätigungselementen von einem der beiden Betätigungskörper ragt und sich in diesem Bereich kein Betätigungselement des anderen Betätigungskörpers befindet.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig.1: eine teilweise geschnittene perspektivische Darstellung eines erfindungsgemäßen Linearantriebs;
- Fig. 2: ein lastseitiges Ende des Linearantriebs in einer perspektivischen Darstellung;
- Fig. 3: eine teilweise geschnittene perspektivische Darstellung der Verstelleinrichtung aus Fig. 2;
- Fig. 4: die Verstelleinrichtung aus Fig. 2 und Fig. 3 in einem Längsschnitt;
- Fig. 5: ein Kopplungselement der Verstelleinrichtung;
- Fig. 6: eine Schrauben- oder Schlingenfeder der Verstelleinrichtung,
- Fig. 7: eine Betätigung der Verstelleinrichtung in eine Betätigungsrichtung, in der eine Notverstellung möglich wird;
- Fig. 8: eine Betätigung der Verstelleinrichtung in eine andere Betätigungsrichtung, in der eine Notverstellung nicht möglich ist;
- Fig. 9: ein Drehring der Verstelleinrichtung.

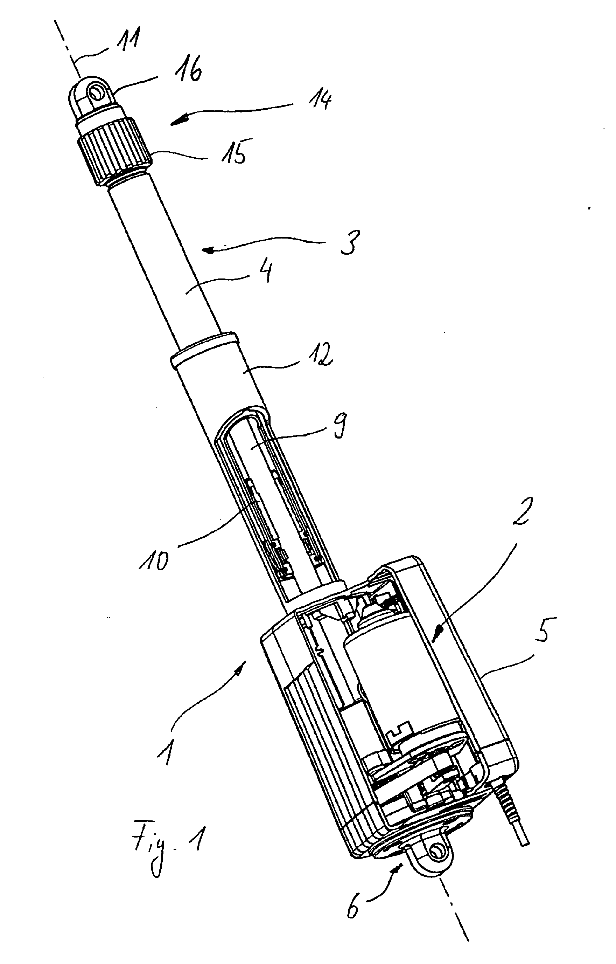

Der in Fig. 1 gezeigte Linearantrieb weist auf einer Antriebsseite 1 einen elektrischen Motor 2 auf, mit dessen rotativer Antriebsbewegung eine Längsbewegung eines auf einer Antriebsseite 1 vorgesehenen Schubrohres 4 bewirkt wird. An einem Gehäuse 5 des Motors 2 ist ein antriebsseitiger Gabelkopf 6 vorgesehen, mit dem der Linearantrieb in eine Anlage, medizinisches Inventar, ein Möbel, eine Maschine oder dergleichen, befestigt werden kann. Hauptsächliche Anwendungsfälle für diesen Linearantrieb sind Patientenbetten, Operationstische, Lifter, insbesondere Patientenlifter, und ähnliches.

Eine Rotationsbewegung einer Motorwelle wird auf eine Spindel 9 übertragen, die ein nicht selbsthemmendes oder ein selbsthemmendes Aussengewinde aufweisen kann.

Um die Rotationsbewegung des Motors ins Langsame zu transformieren, kann zwischen dem Motor 2 und der Spindel 9 ein Getriebe, insbesondere ein Zahnradgetriebe wie beispielsweise ein Planetengetriebe, zwischengeschaltet sein.

Auf der Spindel 9 befindet sich eine Gewindemutter 10. Die Gewindemutter 10 ist mit einem Schubrohr 4 verbunden und gegenüber der Spindel 9 drehfest angeordnet. Das Schubrohr 4 kann hierdurch entlang einer Längsbewegungsachse 11 aus einem Mantelrohr 12 ein- und ausgefahren werden. Die Gewindemutter 10 bzw. das Schubrohr 4 dieses Ausführungsbeispiels können als Getriebeglied im Sinne der Erfindung verstanden werden. Sowohl die Spindel 9, die Gewindemutter 10, das Mantelrohr 12, als auch das Schubrohr 4 sind konzentrisch zur Längsbewegungsachse 11 angeordnet, die gleichzeitig auch Rotationsachse der Spindel 4 ist. Die Längsbewegung des Schubrohres 4 erfolgt aufgrund einer Drehbewegung der Spindel 9, die in an sich vorbekannter Weise in eine translatorische Bewegung der Gewindemutter 10 umgesetzt wird.

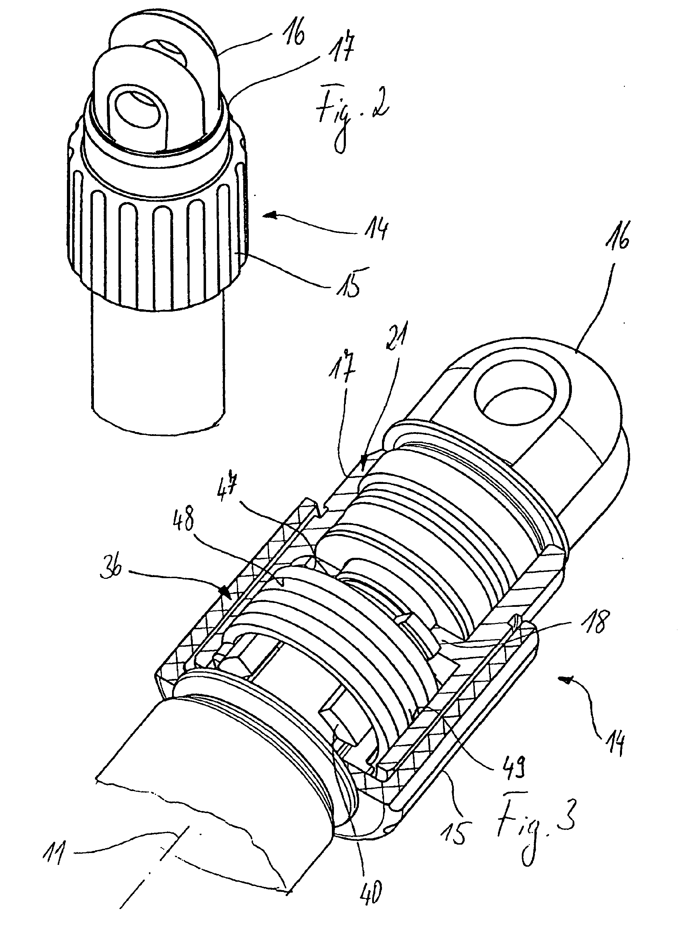

Am oberen Ende des Schubrohres 4 befindet sich eine in den Fig. 2 bis 9 näher dargestellte Notverstelleinrichtung 14, die einen von aussen zugänglichen Drehring 15 aufweist. Auch der Drehring ist konzentrisch zur Längsbewegungsachse 11 angeordnet. An den Drehring 15 schliesst sich ein lastseitiger Gabelkopf 16 an, an dem eine von dem Linearantrieb (in dessen Normalbetrieb) zu bewegende und nicht näher dargestellte Last befestigt werden kann.

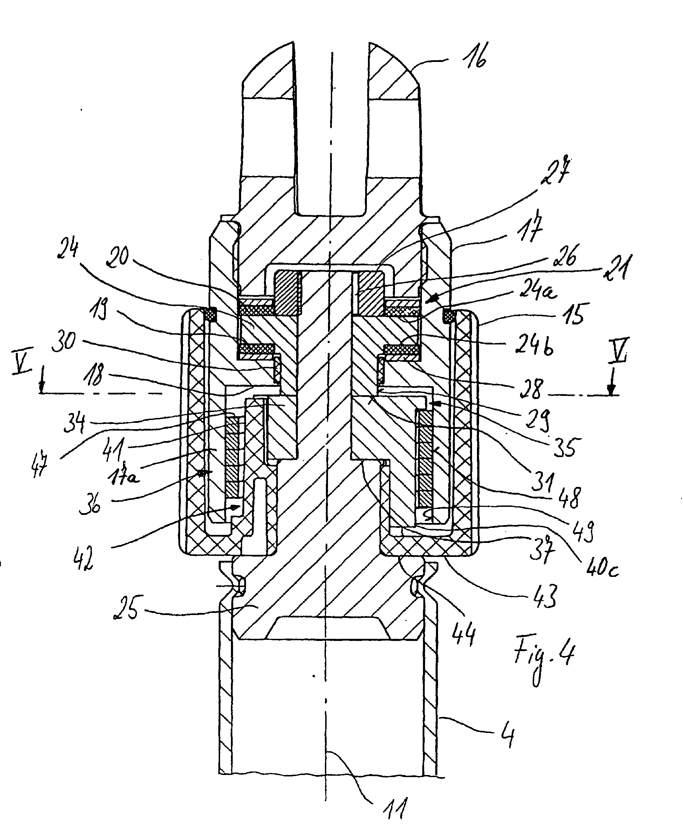

Der Gabelkopf 16 ist drehfest am oberen Ende einer Aufnahmehülse 17 befestigt. Auf einer oberen Seite eines radialen inneren Absatzes der Aufnahmehülse 17 sind ringförmige erste und zweite Bremsscheiben 19, 20 (Fig. 4) einer ersten Bremseinrichtung 21 vorgesehen. Die Bremsscheiben 19, 20 weisen Bremsflächen auf und liegen jeweils gegen unterschiedliche Stirnseiten 24a, 24b eines Ringes 24 an. Die Bremseinrichtung und ihre Wirkungsweise ist in der Patentanmeldung CH 0423/03 der gleichen Anmelderin näher beschrieben. Der Inhalt dieser älteren Patentanmeldung wird deshalb durch Bezugnahme hiermit vollständig aufgenommen.

Der Ring 24 ist auf ein oberes Ende eines Aufnahmekörpers 25 aufgeschoben. Eine auf ein Gewinde 26 des Aufnahmekörpers 25 aufgeschraubte Sicherheitsmutter 27 drückt den Ring 24 in Richtung Schubrohr 4. Zwischen dem radialen Absatz 18 und einer Mantelfläche 29 des Ringes 24 ist ein Gleitlager 30 vorgesehen, das zur radialen Zentrierung des Ringes 24 dient.

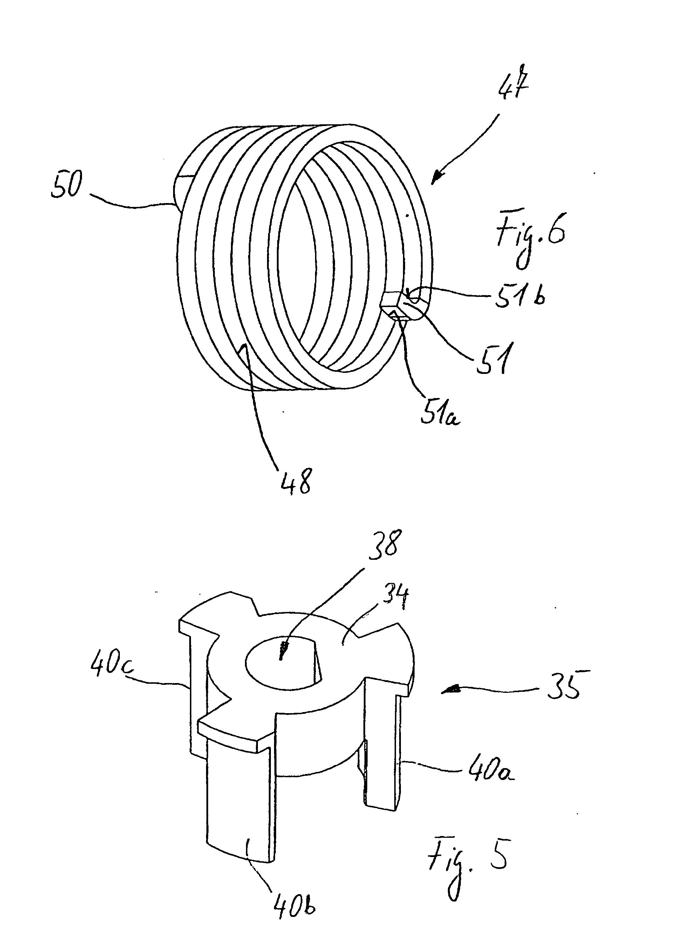

Mit einer dem Gabelkopf 16 abgewandten endseitigen Stirnfläche 31 des Ringes 24 liegt letztgenannter gegen eine äussere Stirnfläche eines ringförmigen Bodenteils 34 eines ersten Klauenkörper 35 an. Dieser in Fig. 5 im einzelnen gezeigte Klauenkörper ist Bestandteil einer Schlingenfederbremse, die sich unterhalb eines radialen Absatzes 18 (Fig. 4) der Aufnahmehülse 17 befindet. Der Teil der Aufnahmehülse 17, der sich unterhalb des Absatzes 17 befindet, wird als Bremsbüchse 17a bezeichnet. Die Schlingenfederbremse wirkt als zweite Bremseinrichtung des Linearantriebs. Für ihre Funktionsweise und ihr Zusammenwirken mit der ersten Bremseinrichtung wird auf die bereits genannte ältere Schweizer Patentanmeldung CH 0423/03 verwiesen.

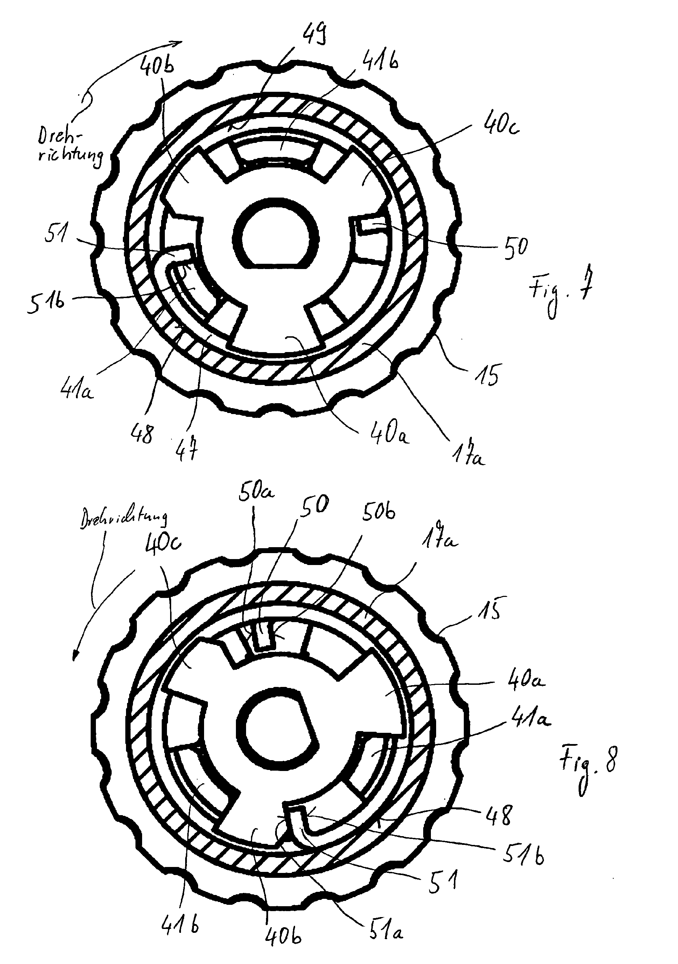

Mit seiner Innenseite liegt das Bodenteil 34 gegen einen ersten Absatz 37 des Aufnahmekörpers 25 an. Die Sicherungsmutter 27 drückt hierbei über den Ring 24 den ersten Klauenkörper 35 gegen den Absatz 37. Das Bodenteil 34 hat im Bereich der Längsbewegungsachse 11 eine Ausnehmung 38, durch die der Aufnahmekörper 25 hindurchgeführt ist (Fig. 4 und Fig. 5). Mit einer Abflachung 39 einer ansonsten kreisrunden Querschnittsform liegt der Aufnahmekörper 25 gegen eine entsprechende Abflachung der Ausnehmung 38 an, wie dies unter anderem aus der Querschnittsdarstellung von Fig. 8 ersichtlich ist. Hierdurch ist der erste Klauenkörper 35 drehfest auf dem Aufnahmekörper 25 gesichert.

Gleichmässig am Umfang des Bodenteils 34 des ersten Klauenkörpers 35 sind als Mitnehmer drei voneinander beabstandete längliche Klauen 40a, 40b, 40c angeordnet, die im wesentlichen parallel zur Längsbewegungsachse 11 ausgerichtet sind. Anstelle von drei Klauen 40a-c könnte jedoch auch eine andere Anzahl an Klauen 40a-c vorhanden sein.

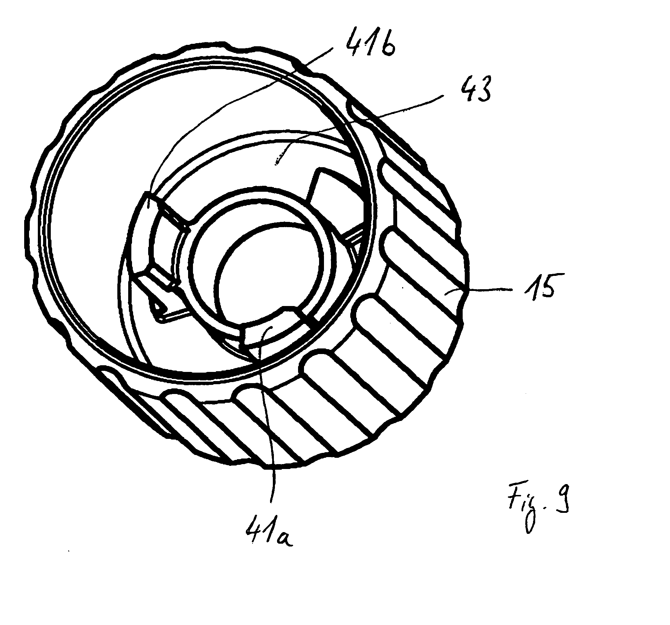

Ein zweiter Klauenkörper 42 weist lediglich zwei voneinander beabstandete Klauen 41 a, 41 b auf. Die freien Enden der beiden Klauen 41 a, 41 b liegen unmittelbar dem Bodenteil 34 des ersten Klauenkörpers 35 gegenüber. Auch die Klauen 41 a, 41 b des zweiten Klauenkörpers 42 verlaufen im wesentlichen parallel zur Längsbewegungsachse 11. Die Klauen 41 sind über einen stirnseitigen Ringabschnitt 43 einstückig mit dem Drehring 15 verbunden (s. auch Fig. 9), dessen Längserstreckung ebenfalls im wesentlichen parallel zu den Klauen 40, 41 ausgerichtet ist. Die Klauen 40a-c, 41 a-b befinden sich somit innerhalb des Drehrings 15. Der Drehring 15 liegt mit seinem Ringabschnitt 43 gegen einen weiteren Absatz 44 des Aufnahmekörpers 25 an, wodurch die Verstelleinrichtung zwischen der Sicherheitsmutter 27 und dem Absatz 44 eingeklemmt wird.

Die Klauen 40a-c, 41 a-b beider Klauenkörper 35, 42 sind von einer Schraubenfeder 47 umgeben. Die in Fig. 6 auch einzeln dargestellte Schraubenfeder 47 ist mit einer geringen Steigung gewickelt, wodurch die einzelnen Windungen näherungsweise gegeneinander anliegen, zumindest sehr nahe beieinander liegen. Eine Länge der Schraubenfeder 47 in Richtung der Längsbewegungsachse 11 entspricht etwa der Länge der Klauen 40a-c, 41a-b.

Die beiden Enden 50, 51 der Schraubenfeder sind in Bezug auf die Längsbewegungsachse 11 etwa radial nach innen gebogen und in Bezug auf die Umfangsrichtung der Schraubenfeder gegeneinander versetzt. Wie insbesondere in den Fig. 7 und 8 zu erkennen ist, ist jede der beiden Klauen 41 a, 41 b des Klauenkörpers 42 zwischen jeweils zwei Klauen 40 des Klauenkörpers 35 angeordnet. Somit folgt in Umfangsrichtung einer der Klauen 40a-c des ersten Klauenkörpers 35 jeweils eine Klaue 41 a, 41 b des zweiten Klauenkörpers 42. Lediglich zwischen den beiden Klauen 40a, 40c des ersten Klauenkörpers 35 befindet sich keine Klaue des zweiten Klauenkörpers 42. Das in den Fig. 7 und 8 vordere Ende 51 der Schraubenfeder 47 ragt in den Raum zwischen der Klaue 40b des ersten und der Klaue 41 a des zweiten Klauenkörpers 35, 42. Das andere, antriebsseitige Ende 50, befindet sich hingegen zwischen den beiden Klauen 40a, 40c des ersten Klauenkörpers 35, zwischen denen keine Klaue des zweiten Klauenkörpers 42 angeordnet ist. Die Klauen 40a-c, 41a-b haben die Funktion von Mitnehmern und können ― wie nachfolgend noch näher erläutert wird ― durch eine Drehbewegung der Klauenkörper 35, 42 in Anlage gegen Seitenflächen der Klauen 40a-c, 41 a-b gebracht werden.

Eine äussere, als Bremsfläche fungierende Fläche 48 der Schrauben- bzw. Umschlingungsfeder 47 liegt im Normalbetrieb gegen eine Innenfläche 49 der Bremsbüchse 17a an, wie dies in Zusammenschau der Fig. 3, 4, 6, 7 und 8 zu erkennen ist. Unter Normalbetrieb ist ein Zustand zu verstehen, in dem eine Antriebsbewegung des Motors 6 als translatorische Bewegung auf den Gabelkopf 16 übertragbar ist.

Bei einer beginnenden Drehbewegung der Spindel 9 aufgrund einer Antriebsbewegung des Motors 6 ist es möglich, dass die Schraubenfeder 47 mit der Bremsbüchse 17a zunächst nicht vollständig drehfest verbunden ist. Da jedoch der erste Klauenkörper 35 mit dem Schubrohr 4 drehfest verbunden ist und somit mitdreht, kommt eine Klaue 40b, 40c des ersten Klauenkörpers 35 in Anlage gegen eine Aussenseite 50a, 51 a von einem der Enden 50, 51 der Schraubenfeder. Bereits nach einem sehr kleinen Drehwinkel wird hierdurch der Durchmesser der Schraubenfeder geweitet. Diese kommt damit sukzessive mit ihrer gesamten äusseren Fläche 48 in Anlage gegen die Innenfläche 49 der Bremsbüchse 17a. Durch den sich daraus ergebenden Reibschluss wird eine drehfeste Verbindung zwischen dem Schubrohr 4 und der Aufnahmehülse 17 ― und damit auch dem Gabelkopf 16 erzeugt. Dies gilt unabhängig von der Drehrichtung der Spindel 9. Da der Gabelkopf 16 an der zu bewegenden Last wiederum drehfest verbunden ist, wird die Drehbewegung der Spindel in eine ausschliesslich translatorische Vorschubbewegung des Gabelkopfes 16 umgesetzt.

Soll hingegen mittels der (Not-)Verstelleinrichtung 14 das Schubrohr 4 in Lastrichtung in das Mantelrohr 12 eingefahren werden, so muss hierzu der Drehring 15 relativ zum Mantelrohr 12 mit einer bestimmten Drehrichtung gedreht werden. In der Darstellung von Fig. 7 ist es eine Drehung im Uhrzeigersinn. Hierdurch gelangt die Klaue 41 a des zweiten Klauenkörpers 42 in Anlage gegen das vordere Ende 51 der Schraubenfeder 47. Die Klaue 41 a drückt hierbei gegen eine Innenseite 51 b der Schraubenfeder 47, wodurch sich diese zusammenzieht. Die damit verbundene Verringerung des Durchmessers der Schraubenfeder 47 löst zumindest teilweise den Reibschluss zwischen der Schraubenfeder 47 und der Aufnahmehülse 17.

Drückt nun eine Last , beispielsweise als Gewichtskraft, auf den Gabelkopf 16, so wird diese Belastung über den Gabelkopf 16 auf die Reibscheibe 22 und die zweite Bremsscheibe 20 eingeleitet. Von dort verläuft der Kraftfluss über den Ring 24 in den Bodenteil 34 des Klauenkörpers 35 und dann in den Aufnahmekörper 25. Letzterer überträgt die Druckkraft der Last über das Schubrohr 4 in die Spindel 9. Da das Gewinde der Spindel 9 vorzugsweise nicht selbsthemmend ist, beginnt die Mutter 10 auf dem Gewinde der Spindel 9 abzulaufen. Die Reibung zwischen der Bremsscheibe 20 und einer ihr gegenüberliegenden Reibscheibe 22 nimmt einen Teil der von der Last ausgehenden Energie auf. Lediglich der verbleibende Energieanteil wirkt noch als Drehmoment und damit als Rotationsenergie auf die Gewindemutter 10. Das übertragbare Moment zwischen dem Schubrohr 4 und dem Gabelkopf 16 ist kleiner, als das in der Spindel und der Gewindemutter durch die Axialkraft erzeugte Moment. Da die Spindel 9 durch den Motor arretiert ist, beginnt somit die Mutter 10 auf der Spindel 9 abzulaufen, wodurch das Schubrohr in das Mantelrohr einläuft.

Die Drehbewegung der Gewindemutter 10 beginnt unmittelbar nachdem mit einer Drehbewegung des Drehrings 15 im Uhrzeigersinn (gemäss der Darstellung von Fig. 7) der Durchmesser der Schraubenfeder 47 verkleinert wurde und der Reibschluss zwischen der Aufnahmehülse und der Schraubenfeder hierdurch in ausreichendem Umfang aufgehoben wurde. Wird die Drehbewegung des Drehrings 15 darüber hinaus fortgesetzt, so wird die Schraubenfeder 47 und schliesslich auch der erste Klauenkörper 35 von dem zweiten Klauenkörper 42 bei dessen Drehbewegung mitgenommen. Das Schubrohr 4 folgt dieser Bewegung zusammen mit dem über den Aufnahmekörper am Schubrohr drehfest verbundenen ersten Klauenkörper 35 und der Schraubenfeder 47. Das Schubrohr 4 dreht sich dann um den Drehwinkel, um den der Drehring 15 manuell gedreht wird. Wird die Drehbewegung des Drehrings 15 gestoppt, so wird hierbei auch die Drehbewegung der Schraubenfeder 47 angehalten. Die Drehbewegung des Drehrings 15 im Uhrzeigersinn, mit der die Freigabe des Schubrohrs 4 für eine Drehbewegung eingeleitet wurde, entspricht somit der Drehrichtung des Schubrohrs 4 bei seiner Einfahrbewegung in das Mantelrohr 12.

Der drehfest mit dem Gabelkopf 16 (und der Last) verbundene erste Klauenkörper 35 dreht jedoch noch geringfügig weiter. Durch die dann gegebene Relativbewegung zwischen dem ersten Klauenkörper 35 und der Schraubenfeder 47 drückt dann eine der Klauen 40 von aussen gegen eines der Enden 50, 51 der Schraubenfeder 47. Hierdurch wird der Durchmesser der Schraubenfeder 47 wieder vergrössert, wodurch zwischen der Schraubenfeder 47 und der Aufnahmehülse 17 wieder ein Reibschluss erzeugt wird. Damit ist der Gabelkopf 16 wieder drehfest mit dem Schubrohr 4 verbunden, wodurch trotz der weiterhin auf das Schubrohr 4 wirkenden Last die Drehbewegung gestoppt ist.

Das Schubrohr 4 hat hierbei in Richtung der Längsbewegungsachse 11 eine Strecke zurückgelegt, die dem zurückgelegten Drehwinkel des Drehrings 15 entspricht. Um mit dem Schubrohr 4 grössere Strecken abzufahren, kann der Drehring 15 mehrmals betätigt werden. Jedem Drehwinkel des Drehrings 15 ist somit eine bestimmte Strecke des Schubrohrs 4 zugeordnet. In anderen Ausführungsformen der Erfindung kann auch vorgesehen sein, dass mittels dem Drehring 15 oder einem sonstigen Verstellelement die (Not-)Verstelleinrichtung lediglich freigegeben wird, ohne dass eine Abhängigkeit zwischen dem Drehwinkel und der Länge des Verfahrwegs des Schubrohrs entlang der Längsbewegungsachse 11 besteht. Es handelt sich dann um eine sogenannte Schnellverstelleinrichtung.

Wird nun der Drehring nicht wie zuvor im Uhrzeigersinn sondern im Gegenuhrzeigersinn gedreht (bezogen auf Fig. 7 und 8) so gelangen die Klauen 41 a und 41 b des zweiten Klauenkörpers 42 in Anlage gegen den ersten Klauenkörper 35. Insbesondere wird hierdurch die Klaue 40b des ersten Klauenkörpers 35 durch die Klaue 41 b mitgenommen, wodurch die Klaue 40b gegen eine Aussenseite 51 a des in Fig. 8 vorderen (abtriebsseitigen) Endes 51 der Schraubenfeder 47 drückt. Dadurch entsteht eine Tendenz zur Vergrösserung des Durchmessers der Schraubenfeder 47 (Bremsfeder). Sofern nicht bereits vorhanden, so entsteht zwischen dem Schubrohr und der Bremsbüchse 17a hierdurch eine drehfeste Verbindung. Durch diese Verbindung wird sichergestellt, dass der Antrieb mit der Notabsenkung nur in der vorgesehenen Lastrichtung betätigt werden kann. Die Lage der Enden 50, 51 der Schraubenfeder 47 und der Klauen 40a-c, 41 a-b trägt dazu bei, dass bei einer Drehrichtung entgegen dem Uhrzeigersinn eine der Klauen gegen eine Innenfläche von einem der beiden Enden 50, 51 auftrifft und ein Lösen der Reibverbindung zwischen der Schraubenfeder und der Bremsbüchse 17a **nicht** erfolgen kann.

Zwar ist in diesem Ausführungsbeispiel der Drehring 15 in zwei Drehrichtungen betätigbar. Die Notabsenkung selbst tritt allerdings nur in die eine beschriebene vorbestimmte Drehrichtung in Wirkung, in welcher der Drehring 15 und damit auch die Gewindemutter 10 eine Drehrichtung im Uhrzeigersinn (in Bezug auf die Fig. 7 und 8) aufweisen. Hierdurch ist von der Abtriebsseite zur Antriebsseite hin ein Last übertragbar und in ein Drehmoment in nur eine vorbestimmte Drehrichtung der Gewindemutter - und damit auch des Schubrohres 4 gegenüber der Spindel - transformierbar. Wird der Drehring in der Darstellung von Fig. 8 im Gegenuhrzeigersinn betätigt, so wird hierdurch entweder eine drehfeste Verbindung des Schubrohrs 4 zum Gabelkopf 16 hin erzeugt oder verfestigt, wodurch dann nur durch eine motorisch angetriebene lineare Verfahrbewegung das Schubrohr aus dem Mantelrohr ausfahrbar ist.

### Bezugszeichenliste

- 1: Antriebsseite
- 2: Motor
- 3: Abtriebsseite
- 4: Schubrohr
- 6: Gabelkopf
- 9: Spindel
- 10: Gewindemutter
- 11: Längsbewegungsachse
- 12: Mantelrohr
- 14: Notverstelleinrichtung
- 15: Drehring
- 16: Gabelkopf
- 17: Aufnahmehülse
- 17a: Bremsbüchse
- 18: radialer Absatz
- 19: Bremsscheibe
- 20: Bremsscheibe
- 21: Bremseinrichtung
- 22: Reibscheibe
- 24: Ring
- 25: Aufnahmekörper
- 26: Gewinde
- 27: Sicherheitsmutter
- 29: Mantelfläche
- 30: Gleitlager
- 31: Stirnfläche von 24
- 34: Bodenteil
- 35: Klauenkörper
- 37: erster Absatz
- 40a-c: Klaue (von 35)
- 41 a, b: Klaue (von 42)
- 42: zweiter Klauenkörper
- 43: Ringabschnitt
- 44: Absatz
- 47: Schraubenfeder
- 48: äussere (Brems-)Fläche
- 49: Innenfläche (von 17a)
- 50: Ende (von 47)
- 50a: Aussenseite
- 51: Ende (von 47)
- 51 a: Aussenseite

## Patentansprüche

1. Linearantrieb mit einer antriebsseitig von einem Motor (2) rotativ antreibbaren Spindel (9), deren Rotationsbewegung in Richtung zur Abtriebsseite (3) des Linearantriebs hin in eine zumindest im wesentlichen translatorische Bewegung eines mit der Spindel (9) wirkverbundenen Getriebegliedes transformierbar ist, der Linearantrieb ferner
eine drehfeste Verbindung zwischen dem Getriebeglied und einem Verbindungsteil aufweist, wobei mit dem Verbindungsteil der Linearantrieb an einer Abtriebsseite (3) an einer zu verstellenden Last anschließbar ist, die drehfeste Verbindung mittels einer Verstelleinrichtung lösbar ist, um eine motorunabhängige Verstellbewegung des Linearantriebs zuzulassen,
**dadurch gekennzeichnet, daß**
die drehfeste Verbindung mittels einem Verstellelement der Verstelleinrichtung nur für Bewegungen mit stets nur einer einzigen vorbestimmten relativen Drehrichtung zwischen der Spindel (9) und dem Getriebeglied lösbar ist.

2. Linearantrieb nach Anspruch 1, **dadurch gekennzeichnet, dass** bei einer Betätigung des Verstellelements der Verstelleinrichtung in eine erste Verstellrichtung eine zuvor drehfeste Verbindung zwischen dem Getriebeglied und dem Verbindungsteil zumindest teilweise lösbar und bei einer Betätigung in eine andere Verstellrichtung die drehfeste Verbindung erzeugt oder eine bereits bestehende drehfeste Verbindung gesichert wird.

3. Linearantrieb nach Anspruch 1 oder 2, **dadurch gekennzeichnet, dass** die Verstelleinrichtung eine Schraubenfeder (47) aufweist, die mit einer Bremsbüchse zusammenwirkt, insbesondere in einer Bremsbüchse (17a) angeordnet ist, und mit der eine Reibverbindung mit der Bremsbüchse erzeugbar und zumindest teilweise lösbar ist.

4. Linearantrieb nach Anspruch 3, **dadurch gekennzeichnet, dass** mit dem Verstellelement auf zumindest eines der Enden (50, 51) der Schraubenfeder (47) einwirkbar ist, wobei diese Einwirkung zu einer zumindest lokalen Vergrösserung oder Verkleinerung eines Durchmessers der Schraubenfeder führt.

5. Linearantrieb nach Anspruch 3 oder 4, **dadurch gekennzeichnet, dass** mit dem Verstellelement nur auf eines der Enden (50, 51) der Schraubenfeder (47) einwirkbar ist.

6. Linearantrieb nach zumindest einem der Ansprüche 2 bis 5, **dadurch gekennzeichnet, dass** eine Betätigung des Verstellelements der Verstelleinrichtung in eine erste Verstellrichtung zu einer zumindest lokalen Vergrösserung und bei einer Betätigung in eine andere Verstellrichtung zu einer zumindest lokalen Verkleinerung des Durchmessers der Schraubenfeder (47) führt.

7. Linearantrieb nach einem der vorhergehenden Ansprüche 3 bis 6, **gekennzeichnet durch** zumindest einen mit der Schraubenfeder (47) in Wirkverbindung bringbaren Betätigungskörper der Verstelleinrichtung, an dem mehrere voneinander beabstandete Betätigungselemente ausgebildet sind.

8. Linearantrieb nach Anspruch 7, **dadurch gekennzeichnet, dass** mit dem Verstellelement eine Drehung von Betätigungselementen bewirkbar ist, von denen dadurch zumindest eines mittelbar oder unmittelbar gegen ein Ende der Schraubenfeder (47) zu liegen kommt.

9. Linearantrieb nach Anspruch 7 oder 8, **gekennzeichnet, durch** einen zweiten Betätigungskörper, der mit mehreren zueinander beabstandete Betätigungselementen versehen ist und der mit dem ersten Betätigungskörper zusammenwirkt.

10. Linearantrieb nach Anspruch 9, **dadurch gekennzeichnet, dass** einer der beiden Betätigungskörper eine geringere Anzahl an Betätigungselementen aufweist als der andere Betätigungskörper.

11. Linearantrieb nach Anspruch 10, **dadurch gekennzeichnet, dass** bei einem der beiden Betätigungskörper die Betätigungselemente nicht gleichmässig um eine Drehachse des Betätigungskörpers verteilt sind.

12. Linearantrieb nach einem der Ansprüche 9 bis 11, **dadurch gekennzeichnet, dass** die beiden Betätigungskörper ineinander geschoben und gegeneinander verdrehbar sind und nach einer Drehbewegung ein Betätigungselement des einen Betätigungskörpers gegen ein Betätigungselement des anderen Betätigungskörpers in Anlage kommt und hierbei der eine Betätigungskörper den anderen Betätigungskörper in seiner Drehbewegung mitnimmt.

13. Linearantrieb nach einem der Ansprüche 9 bis 12, **dadurch gekennzeichnet, dass** eines der Enden (50, 51) der Schraubenfeder (47) in einen Bereich zwischen zwei Betätigungselemente des gleichen Betätigungskörpers ragt, wobei zwischen diesen beiden Betätigungselementen sich kein Betätigungselement des anderen Betätigungskörpers befindet.

14. Linearantrieb nach einem der Ansprüche 9 bis 13, **dadurch gekennzeichnet, dass** bei einer Bewegung des Verstellelements in nur eine bestimmte Verstellrichtung stets nur ein bestimmtes Betätigungselement von einem der beiden Betätigungskörper so auf die Schraubenfeder (47) einwirkt, dass hierdurch eine drehfeste Verbindung zwischen der Schraubenfeder (47) und der Bremsbüchse (17a) zumindest teilweise lösbar ist.

15. Linearantrieb nach zumindest einem der vorhergehenden Ansprüche 7 bis 14, **dadurch gekennzeichnet, dass** zumindest einer der Betätigungskörper als Klauenkörper (35, 42)ausgebildetet ist, an dem als Betätigungselemente mehrere Klauen (40a-c, 41 a, 41 b) ausgebildet sind.

## Claims

1. Linear drive comprising a spindle (9) which can be rotationally driven by a motor (2) on the drive side, the rotational motion whereof in the direction of the driven side (3) of the linear drive can be transformed into at least substantially translational motion of a transmission member operatively connected to the spindle (9), said linear drive further
comprising a torsionally resistant connection between the transmission member and a connecting part, wherein the linear drive can be connected by means of said connecting part on the driven side (3) to a load to be adjusted, the torsionally resistant connection can be released by means of an adjusting device to allow an adjusting movement of the linear drive independent of the motor,
**characterised in that**
the torsionally resistant connection can only be released by means of an adjusting element of said adjusting device for movements always having only a single pre-determined relative direction of rotation between the spindle (9) and the transmission member.

2. The linear drive according to claim 1, **characterised in that** during an actuation of the adjusting element of said adjusting device in a first adjusting direction, a previously torsionally resistant connection between the transmission member and the connecting part can be at least partially released and during an actuation in another adjusting direction, the torsionally resistant connection is produced or an already existing torsionally resistant connection is secured.

3. The linear drive according to claim 1 or 2, **characterised in that** the adjusting device comprises a helical spring (47) which cooperates with a brake bushing, in particular is disposed in a brake bushing (17a), and by which means a frictional connection can be produced with the brake bushing and at least partially released.

4. The linear drive according to claim 3, **characterised in that** at least one of the ends (50, 51) of the helical spring (47) can be acted upon with the adjusting element, wherein this action leads to an at least local enlargement or reduction in the diameter of the helical spring.

5. The linear drive according to claim 3 or 4, **characterised in that** only one of the ends (50, 51) of the helical spring (47) can be acted upon with the adjusting element.

6. The linear drive according to at least one of claims 2 to 5, **characterised in that** an actuation of the adjusting element of the adjusting device in a first adjusting direction leads to an at least local enlargement and an actuation in another adjusting direction leads to an at least local reduction in the diameter of the helical spring (47).

7. The linear drive according to any one of the preceding claims 3 to 6, **characterised by** at least one actuating member of the adjusting device which can be brought into operative connection with the helical spring (47), on which member a plurality of spaced-apart actuating elements are formed.

8. The linear drive according to claim 7, **characterised in that** a rotation of actuating elements can be effected with said adjusting element, by which means at least one thereof comes to rest indirectly or directly against one end of the helical spring (47).

9. The linear drive according to claim 7 or 8, **characterised by** a second actuating member which is provided with a plurality of spaced-apart actuating elements and which cooperates with said first actuating member.

10. The linear drive according to claim 9, **characterised in that** one of the two actuating members has a smaller number of actuating elements than the other actuating member.

11. The linear drive according to claim 10, **characterised in that** in one of the two actuating members, the actuating elements are not distributed uniformly about an axis of rotation of the actuating member.

12. The linear drive according to any one of claims 9 to 11, **characterised in that** the two actuating members can be pushed into one another and twisted with respect to one another and after a rotational movement, one actuating element of one actuating member comes to rest against one actuating element of the other actuating member and the one actuating member hereby entrains the other actuating member in its rotational movement.

13. The linear drive according to any one of claims 9 to 12, **characterised in that** one of the ends (50, 51) of the helical spring (47) projects into a region between two actuating elements of the same actuating member wherein no actuating element of the other actuating member is located between these two actuating elements.

14. The linear drive according to any one of claims 9 to 13, **characterised in that** during a movement of the adjusting element in only one specific adjusting direction, only one specific actuating element of one of the two actuating members always acts on the helical spring (47) in such a manner that a torsionally resistant connection between the helical spring (47) and the brake bushing (17a) can thereby be at least partially released.

15. The linear drive according to at least one of the preceding claims 7 to 14, **characterised in that** one of the actuating members is configured as a claw member (35, 42) on which a plurality of claws (40a-c, 41a, 41b) are formed as actuating elements.

## Revendications

1. Dispositif d'entraînement linéaire avec une broche (9) pouvant être entraînée du côté entraînement par un moteur (2) de façon rotative, broche dont le mouvement de rotation en direction du côté entraînement (3) du dispositif d'entraînement linéaire peut être transformé en un mouvement au moins essentiellement de translation d'un élément de transmission opérationnellement relié à la broche (9), dans lequel le dispositif d'entraînement linéaire comporte en outre un assemblage bloqué en rotation entre l'élément de transmission et une pièce d'assemblage, la pièce d'assemblage permettant de raccorder le dispositif d'entraînement linéaire d'un côté de l'entraînement (3) à une charge à ajuster, l'assemblage bloqué en rotation pouvant être défaite au moyen d'un dispositif de réglage, pour permettre un mouvement de réglage du dispositif d'entraînement linéaire indépendamment du moteur,
**caractérisé en ce que**
l'assemblage bloqué en rotation pouvant être défaite au moyen d'un élément de réglage du dispositif de réglage peut seulement être défaite pour des mouvements avec un seul sens de rotation relatif prédéterminé entre la broche (9) et l'élément de transmission.

2. Dispositif d'entraînement linéaire selon la revendication 1, **caractérisé en ce que** lors d'un actionnement de l'élément de réglage du dispositif de réglage dans un premier sens de réglage, un assemblage auparavant bloqué en rotation entre l'élément de transmission et la pièce d'assemblage devient au moins partiellement amovible, et **en ce que** lors d'un actionnement dans un autre sens de réglage, l'assemblage bloqué en rotation est produit ou alors un assemblage bloqué en rotation déjà existant est sécurisé.

3. Dispositif d'entraînement linéaire selon l'une des revendications 1 et 2, **caractérisé en ce que** le dispositif de réglage comporte un ressort à boudin (47), qui coopère avec une douille de freinage en étant notamment disposé dans une douille de serrage (17a), et avec lequel un assemblage à friction avec la douille de freinage peut être produit et au moins partiellement défait.

4. Dispositif d'entraînement linéaire selon la revendication 3, **caractérisé en ce que** l'élément de réglage permet d'agir sur au moins l'une des extrémités (50, 51) du ressort à boudin (47), cette action provoquant au moins localement un agrandissement ou une réduction d'un diamètre du ressort à boudin.

5. Dispositif d'entraînement linéaire selon l'une des revendications 3 ou 4, **caractérisé en ce que** l'élément de réglage permet d'agir seulement sur l'une des extrémités (50, 51) du ressort à boudin (47).

6. Dispositif d'entraînement linéaire selon l'une au moins des revendications 2 à 5, **caractérisé en ce qu'**un actionnement de l'élément de réglage du dispositif de réglage dans un premier sens de réglage provoque au moins localement un agrandissement du diamètre du ressort à boudin (47), et **en ce qu'**un actionnement dans un autre sens de réglage provoque au moins localement une réduction de ce même diamètre.

7. Dispositif d'entraînement linéaire selon l'une des revendications 3 à 6, **caractérisé par** au moins un corps d'actionnement du dispositif de réglage pouvant être opérationnellement relié avec le ressort à boudin (47), corps sur lequel sont formés plusieurs éléments d'actionnement espacés entre eux.

8. Dispositif d'entraînement linéaire selon la revendication 7, **caractérisé en ce que** l'élément de réglage permet de produire une rotation des éléments d'actionnement, parmi lesquels au moins un est alors appliqué directement ou indirectement contre une extrémité du ressort à boudin (47).

9. Dispositif d'entraînement linéaire selon l'une des revendications 7 et 8, **caractérisé par** un deuxième corps d'actionnement, qui est pourvu de plusieurs éléments d'actionnement espacés entre eux et qui coopère avec le premier corps d'actionnement.

10. Dispositif d'entraînement linéaire selon la revendication 9, **caractérisé en ce que** l'un des deux corps d'actionnement comporte un plus petit nombre d'éléments d'actionnement que l'autre corps d'actionnement.

11. Dispositif d'entraînement linéaire selon la revendication 10, **caractérisé en ce que** sur l'un des deux corps d'actionnement, les éléments d'actionnement ne sont pas répartis de façon régulière autour d'un axe de rotation du corps d'actionnement.

12. Dispositif d'entraînement linéaire selon l'une des revendications 9 à 11, **caractérisé en ce que** les deux corps d'actionnement sont emboîtés l'un dans l'autre et peuvent effectuer une rotation l'un par rapport à l'autre, et **en ce que** suite à un mouvement de rotation, un élément d'actionnement de l'un des corps d'actionnement touche un élément d'actionnement de l'autre corps d'actionnement, l'un des corps d'actionnement entraînant ainsi l'autre corps d'actionnement dans son mouvement de rotation.

13. Dispositif d'entraînement linéaire selon l'une des revendications 9 à 12, **caractérisé en ce que** l'une des extrémités (50, 51) du ressort à boudin (47) s'introduit dans une région située entre deux éléments d'actionnement du même corps d'actionnement, aucun élément d'actionnement de l'autre corps d'actionnement ne se trouvant entre ces deux éléments d'actionnement.

14. Dispositif d'entraînement linéaire selon l'une des revendications 9 à 13, **caractérisé en ce que** lors d'un mouvement de l'élément de réglage dans un seul sens de réglage déterminé, seul un élément d'actionnement déterminé de l'un des deux corps d'actionnement agit de telle façon sur le ressort à boudin (47), qu'un assemblage bloqué en rotation entre le ressort à boudin (47) et la douille de freinage (17a) est au moins partiellement amovible.

15. Dispositif d'entraînement linéaire selon l'une au moins des précédentes revendications 7 à 14, **caractérisé en ce qu'**au moins l'un des corps d'actionnement est conçu comme un corps de patte (35, 42), sur lequel sont formées plusieurs pattes (40a-c, 41a, 41b) en tant qu'éléments d'actionnement.
